# EUROPEAN PATENT SPECIFICATION

(11) **EP 1 361 924 B1**
(45) Date of publication and mention of the grant of the patent: **27.09.2006**
(21) Application number: 02711545.0
(22) Date of filing: 14.02.2002
(51) Int. Cl.: B01L 3/00

(54) **REACTION PLATE WITH SLIDABLE COVER AND METHOD TO USE THE SAME**
REAKTIONSGEFÄSS MIT VERSCHIEBBAREM DECKEL UND VERFAHREN ZUR VERWENDUNG DESSELBEN
PLAQUE DE REACTION A COUVERCLE GLISSANT ET PROCEDE D'UTILISATION CORRESPONDANT

(30) Priority: 15.02.2001 NL 1017374
(43) Date of publication of application: 19.11.2003
(73) Proprietor: Technische Universiteit Delft, 2628 BL Delft (NL)
(72) Inventor: MOERMAN, Robert, NL-2582 HN Den Haag (NL); VAN DEDEM, Gijs, Willem, Karel, NL-5345 VX Oss (NL)
(74) Representative: Kupecz, Arpad
(86) International application number: PCT/NL2002/000095
(87) International publication number: WO 2002/064252

(56) References cited:
- EP-A- 1 025 902
- WO-A-01/51099
- WO-A-93/13856
- WO-A-98/15356
- DE-A- 19 605 814
- GB-A- 2 356 253
- US-A- 5 632 399

## Description

The present invention relates to a method for carrying out a reaction in a which device comprises
- a substrate provided with a well; and
- a cover means for covering the substrate and in particular the well, wherein the substrate has an upper side and the cover means a lower side, the cover means and the substrate being slidable in relation to one another in the plane of the upper side of the substrate, and that the substrate is provided with an aperture, which in a first position does not overlap the well, while in a second position overlapping the well at least partly.
   EP-A-1 025 902 discloses a method for polymer synthesis. The use of the cover means allows for prevention of evaporation, which is in particular applicable to substrates that have very small wells. The problem of the liquid in the well evaporating increases especially in devices in which reactions are carried out in a very small reaction volume, while the application of the cover means becomes more difficult. This applies in particular to substrates that have very small wells, e.g. wells having a volume of < 10 nl.
   It is an object of the present invention to provide a method allowing a well of a device comprising a substrate with the well and a cover means to be filled and subsequently covered quickly and satisfactorily.
   To this end the method according to the preamble is characterised in that a liquid is fed to the device and due to capillary action the space between the substrate and the cover means is filled with liquid, in that in order to fill the well with liquid, the substrate and the cover means are in the second position and air is discharged via the aperture, and in that after the well has been filled, the cover means and the substrate are slid in relation to one another in order to move the cover means and the substrate to the first position.
   By adhering to a particular distance between the cover means and the substrate, which distance may be simply determined by trial, it is possible to ensure that in the first instance the well is not being filled, while due to capillary action the space between the upper side of the substrate and the cover means *is* being filled. By allowing the well and the aperture to overlap, the air that first helped to prevent the well being filled may be discharged allowing the well to be filled.
   This method is especially favourable because the liquid comes from the immediate surroundings of the well. The currents are such that in the case of several wells, substantially no contamination can occur between the different wells. The necessary distance depends on the hydrophilic nature of the surfaces of the substrate and the cover means, as well as that of the liquid. If the well is already being filled during the feeding of the liquid to the device, the distance between the substrate and the cover means is too great. If there is insufficient liquid for filling the well, the distance between the substrate and the cover means is too small.
   Preferably the liquid is fed to the device via the feed aperture. This makes simple filling of the wells possible.
   Once back in a first position, the cover means is pressed to the substrate preferably with a force of 1-2 kg/cm² in order to further limit evaporation via an aperture.
   The invention is performed using a device for carrying out a reaction which device comprises
- a substrate provided with a well; and
- a cover means for covering the substrate and in particular the well, wherein the substrate has an upper side and the cover means a lower side, the cover means and the substrate being slidable in relation to one another in the plane of the upper side of the substrate, and that the substrate is provided with an aperture, which in a first position does not overlap the well, while in a second position overlapping the well at least partly.

Such a device allows the well to be filled by means of surface tensional forces at any desired moment.

In practice, the device will comprise several wells, which wells are preferably arrayed in the form of a regular pattern. Further, in general at least either the lower side of the cover means or the upper side of the substrate will be flat.

The cover means is preferably provided with several apertures, and preferably there is an equal number of wells and apertures and the apertures are substantially arranged in the same pattern as the openings.

This allows the wells to be filled simultaneously without any liquid being transferred from one well to the other, which could result in false positive reactions.

The diameter of the apertures is preferably at least at the lower side of the cover means smaller than the distance between two adjacent wells.

This allows the cover means to be moved over a short distance to the first position.

Preferably at least one of the surfaces chosen from the lower side of the cover means and the upper side of the substrate is hydrophilic.

The hydrophilic nature enhances the rate of transport of liquid between the cover means and the substrate. It also increases the likelihood of the well being filled successfully.

According to a preferred embodiment, the cover means is provided with a feed aperture for feeding a liquid, which feed aperture exits above the upper side of the substrate.

Such a feed aperture makes it possible to feed liquid via the upper side of the cover means instead of via the gap between the substrate and the cover means. This not only makes it simpler to supply the liquid, but will in practice also mean that the liquid can be supplied in closer proximity to the wells, which means that filling can be effected more quickly. The feed aperture will not be located above a well to be filled.

The well is preferably provided with a reagent.

The reagent may be a receptor or ligand, such substances being understood to mean a substance that specifically, and preferably with a high affinity, binds to a substance to be detected (or mutatis mutandis is bound thereby). The reagent may also be a substrate for an (enzyme) reaction.

Advantageously at least either the substrate or the covering means is optically transparent, and more advantageously they both are.

In this way it is possible to carry out measurements on a substrate very simply and quickly, allowing parallel measurements in the case of an array of wells.

The invention will now be elucidated with the aid of the following exemplary embodiment and with reference to the drawing in which
Figure 1 a and b, respectively, show a top view of the substrate of a device according to the invention, as well as a bottom view of the cover means for the substrate;
Figure 2 shows a cross section along the line II-II of the device represented in Figure 1;
Figure 3a shows a top view of a device according to the invention with the cover means and the substrate in a first position in relation to one another; and
Figure 3b shows the same top view of a device according to the invention with the cover means and the substrate in a second position in relation to one another.

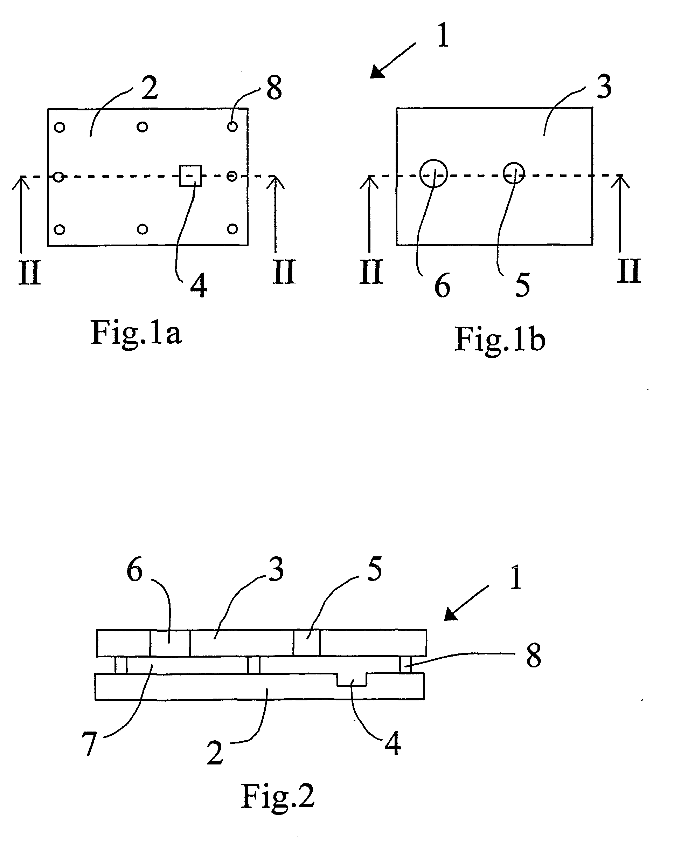

Figure 1 shows a device 1 according to the invention, which device comprises a substrate 2 and a cover means 3.

The substrate 2 is a silicon substrate that by means of well-known techniques has been provided with a silicon nitride surface. The substrate 2 is provided with a matrix of wells 4 (one of which is shown) for the reproducible, and in particular with reproducible speed, filling of wells 4. The substrate 2 is at its upper side provided with projecting elements 8. At its lower side, the cover means 3 is completely flat so that once the cover means has been placed on the substrate 2, it is slidable equidistant to the surface of the substrate.

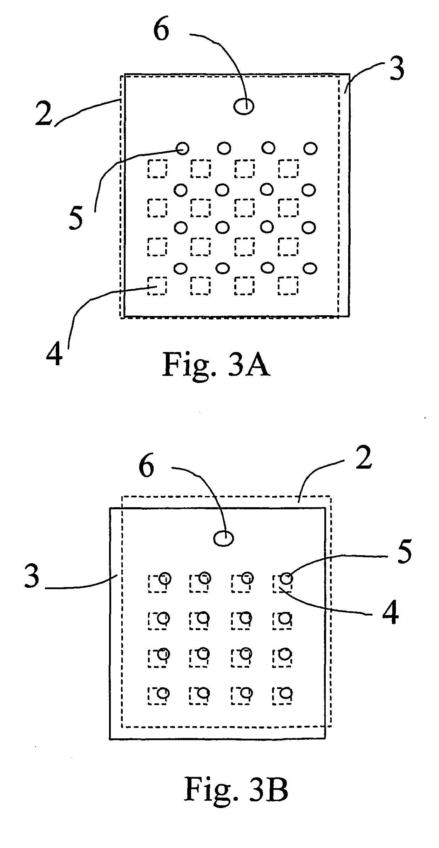

In Figure 2, in which the cover means formed by a polymethyl methacrylate cover slip (thickness 0.5 mm) is placed on the substrate 2, an aperture 5 can be seen, which does not overlap with a well 4. In the first position, shown here, the liquid can be fed to the device via a feed aperture 6, so that the gap 7 between the surface of the substrate 2 and the lower side of the cover means 3 is filled with liquid. In Figure 3a this first position is shown for a substrate 2 in a top view (represented by dotted lines) comprising a plurality of wells 4. The cover means 3 (drawn as continuous lines) comprises apertures 5, which in this first position do not overlap the wells 4. Due to the interaction of cohesive and adhesive forces (which interaction depends on the hydrophilicity of the liquid and the surface of the substrate 2 and the cover means 3) the gap 7 is filled with liquid but the wells 4 are not. These are/remain filled with air. By moving the cover means 3 and the substrate 2 in relation to each other to a second position in which the aperture 5 overlaps well 4 at least partly (as shown for the substrate of Figure 3 a, in Figure 3b), the air can escape from the well 4 and liquid is able to flow into well 4. If the centres of the aperture 5 and the well 4 coincide, the liquid is supplied from radial direction, guaranteeing absolutely that any reactant present in the well 4 will not flow into another well 4.

The projecting elements 8 on the surface of the substrate 2 and the cover means 3 may interact in such a way that the cover means 3 is provided with recesses so that even before there is an overlap between the aperture 5 and a well 4, the projecting elements 8 will fall into the recesses (not shown) of the cover means 3, as a result of which the substrate 2 and the cover means 3 are kept apart by liquid that is present in the gap 7. When the second position, in which there is an overlap between the aperture and the well 4 is reached, the width of the gap 7 can decrease to allow the well 4 to be supplied with liquid.

After the wells 4 have been filled, the cover means may be positioned such that there is no longer any overlap between the well 4 and the aperture 5, the cover means 3 may be pressed against the substrate 2 with a sufficient force to ensure that any loss of liquid from the well 4 will be virtually negligible.

The cover means 3 may be made, for example, of Perspex (PMMA) or of glass. This provides an optically transparent cover means that makes it possible to carry out optical measurements. Optionally, the substrate 2 may (also) be made of such a material and may also be optically transparent. Around the wells 4 the substrate 2 may be provided with rubber to provide a seal.

## Claims

1. A method for carrying out a reaction in a device which device comprises
- a substrate provided with a well; and
- a cover means for covering the substrate and in particular the well, wherein the substrate has an upper side and the cover means a lower side, the cover means and the substrate being slidable in relation to one another in the plane of the upper side of the substrate, and that the substrate is provided with an aperture, which in a first position does not overlap the well, while in a second position overlapping the well at least partly, **characterized in that** a liquid is fed to the device and due to capillary action the space between the substrate and the cover means is filled with liquid, **in that** in order to fill the well with liquid, the substrate and the cover means are in the second position and air is discharged via the aperture, and **in that** after the well has been filled, the cover means and the substrate are slid in relation to one another in order to move the cover means and the substrate to the first position.

2. A method according to claim 1, **characterized in that** in a first position, in which the through-flow opening does not overlap the well, a liquid is fed to the device, wherein due to capillary action the space between the substrate and the cover means is not filled with liquid, the cover means and the substrate are slid in relation to one another to the second position in order to fill the well with liquid, and **in that** after the well has been filled the substrate and the cover means are moved in relation to one another in order to return the cover means and the substrate to the first position.

3. A method according to claim 1 or 2, **characterized in that** the liquid is fed to the device via the through-flow opening.

4. A method according to one of the claims 1 to 3, **characterized in that** once back in a first position, the cover means is pressed to the substrate with a force of 1-2 kg/cm².

## Patentansprüche

1. Verfahren zum Durchführen einer Reaktion in einer Einheit, wobei die Einheit das Folgende umfasst:
- ein Substrat, welches mit einer Vertiefung versehen ist; und
- ein Deckmittel zum Bedecken des Substrats und insbesondere der Vertiefung, wobei das Substrat eine obere Seite und das Deckmittel eine untere Seite aufweist, das Deckmittel und das Substrat in der Ebene der oberen Seite des Substrats im Verhältnis zueinander verschiebbar sind, und wobei das Substrat mit einer Öffnung versehen ist, welche sich in einer ersten Position nicht mit der Vertiefung überschneidet, während sie sich in einer zweiten Position mit der Vertiefung zumindest teilweise überschneidet, **dadurch gekennzeichnet, dass** der Einheit eine Flüssigkeit zugeführt wird und aufgrund des Kapillareffekts der Raum zwischen dem Substrat und dem Deckmittel mit Flüssigkeit gefüllt wird, dass sich das Substrat und das Deckmittel in der zweiten Position befinden und über die Öffnung Luft ausströmt, um die Vertiefung mit Flüssigkeit zu füllen, und dass, nachdem die Vertiefung gefüllt worden ist, das Deckmittel und das Substrat im Verhältnis zueinander verschoben werden, um das Deckmittel und das Substrat in die erste Position zu bewegen.

2. Verfahren nach Anspruch 1, **dadurch gekennzeichnet, dass** in einer ersten Position, in welcher sich die Durchflussöffnung nicht mit der Vertiefung überschneidet, der Einheit eine Flüssigkeit zugeführt wird, wobei der Raum zwischen dem Substrat und dem Deckmittel nicht aufgrund des Kapillareffekts mit Flüssigkeit gefüllt wird, das Deckmittel und das Substrat im Verhältnis zueinander in die zweite Position verschoben werden, um die Vertiefung mit Flüssigkeit zu füllen, und dass, nachdem die Vertiefung gefüllt worden ist, das Substrat und das Deckmittel im Verhältnis zueinander bewegt werden, um das Deckmittel und das Substrat in die erste Position zurückzubringen.

3. Verfahren nach Anspruch 1 oder 2, **dadurch gekennzeichnet, dass** die Flüssigkeit der Einheit über die Durchflussöffnung zugeführt wird.

4. Verfahren nach einem der Ansprüche 1 bis 3, **dadurch gekennzeichnet, dass** das Deckmittel, wenn es einmal in eine erste Position zurückgelangt ist, mit einer Kraft von 1 bis 2 kg/cm² auf das Substrat gepresst wird.

## Revendications

1. Procédé de mise en oeuvre d'une réaction dans un dispositif, lequel dispositif comprend :
- un substrat pourvu d'un puits ; et
- un moyen de couverture pour couvrir le substrat et, en particulier, le puits, ledit substrat ayant une face supérieure et ledit moyen de couverture ayant une face inférieure, ledit moyen de couverture et ledit substrat étant coulissants l'un par rapport à l'autre dans le plan de la face supérieure du substrat, et le substrat étant pourvu d'une ouverture qui, dans une première position, ne chevauche par le puits tandis que, dans une seconde position, elle chevauche le puits au moins partiellement, **caractérisé en ce qu'**un liquide est introduit dans le dispositif et, par suite de l'action de capillarité, l'espace entre le substrat et le moyen de couverture est rempli de liquide de sorte que, pour remplir le puits de liquide, le substrat et le moyen de couverture sont dans la seconde position et de l'air est chassé via l'ouverture, et **en ce que**, après que le puits a été rempli, le moyen de couverture et le substrat sont mus par coulissement l'un par rapport à l'autre pour déplacer le moyen de couverture et le substrat vers la première position.

2. Procédé selon la revendication 1, **caractérisé en ce que**, dans une première position dans laquelle l'ouverture d'écoulement ne chevauche par le puits, un liquide est introduit dans le dispositif, l'espace entre le substrat et le moyen de couverture, par suite de l'action capillaire, n'étant pas rempli de liquide, le moyen de couverture et le substrat étant mus en coulissement l'un par rapport à l'autre vers la seconde position pour remplir le puits de liquide et, **en ce que**, après que le puits a été rempli, le substrat et le moyen de couverture sont déplacés l'un par rapport à l'autre pour ramener le moyen de couverture et le substrat en la première position.

3. Procédé selon la revendication 1 ou 2, **caractérisé en ce que** le liquide est introduit dans le dispositif via l'ouverture d'écoulement.

4. Procédé selon l'une des revendications 1 à 3, **caractérisé en ce que**, une fois de retour en la première position, le moyen de couverture est pressé sur le substrat avec une force de 1-2 kg/cm².
